# FASCICULE DE BREVET EUROPEEN

(11) **EP 2 151 700 B1**
(45) Date de publication et mention de la délivrance du brevet: **16.01.2013**
(21) Numéro de dépôt: 09166021.7
(22) Date de dépôt: 21.07.2009
(51) Int. Cl.: G01V 1/20

(54) **Flûte sismique formée de sections comprenant une gaine principale revêtue d'une gaine externe formée d'un matériau thermoplastique chargé par un matériau biocide**
Seismisches Kabel, das aus Abschnitten mit einem Hauptmantel besteht, der von einem Außenmantel aus thermoplastischem Material, dem ein biozides Material beigemengt ist, geschützt wird
Seismic streamer composed of sections comprising a main sheath covered with an external sheath made of a thermoplastic material incorporating a biocide material

(30) Priorité: 28.07.2008 FR 0804282
(43) Date de publication de la demande: 10.02.2010
(73) Titulaire: Sercel, 44470 Carquefou (FR)
(72) Inventeur: Vignaux, Jean-Jacques, 44470, CARQUEFOU (FR)
(74) Mandataire: Larcher, Dominique

(56) Documents cités:
- EP-A- 0 478 422
- EP-A- 0 560 674
- US-A- 5 471 436
- US-A1- 2003 022 793

## Description

Le domaine de l'invention est celui de l'acquisition de données sismiques. Plus précisément, l'invention concerne les équipements pour l'analyse de fonds marins.

L'invention concerne en particulier l'industrie de la prospection pétrolière par méthode sismique, mais peut s'appliquer à tout domaine mettant en oeuvre un réseau d'acquisition de données sismiques en milieu marin.

Dans le domaine de l'invention, les opérations d'acquisition, sur le terrain, de données géophysiques, mettent classiquement en oeuvre des réseaux de capteurs. Ces capteurs sont le plus souvent des hydrophones, cependant lesdites opérations peuvent également mettre en oeuvre des géophones, accéléromètres ou tout autre type de capteurs.

Les hydrophones mentionnés précédemment, ceux-ci étant répartis le long de câbles pour former des antennes acoustiques linéaires couramment désignées par les termes « streamers » ou « flûtes sismiques ». Le réseau de flûtes sismiques est tracté par un bateau sismique.

Une flûte sismique est constituée d'un assemblage de sections individuelles instrumentées de capteurs sismiques et d'électroniques de conversion analogique numérique associées.

Le bateau sismique tracte également une ou plusieurs sources sismiques constituées d'un réseau de canons à air, canons à eau ou vibrateurs acoustiques. L'onde de pression générée par la source sismique traverse la colonne d'eau et insonifie les couches supérieures du fond marin. Une partie du signal est réfractée par les interfaces et les inhomogénéités de la croûte océanique. Les signaux acoustiques résultants sont alors détectés par les capteurs sismiques répartis sur toute la longueur des flûtes sismiques. Ces signaux acoustiques sont conditionnés, numérisés et retransmis par la télémétrie des flûtes sismiques vers le poste opérateur situé sur le bateau sismique où s'effectue le traitement des données brutes.

Les campagnes d'exploration sismiques peuvent être programmées sur des périodes s'étendant sur plusieurs mois. De plus, même en cas de conditions météorologiques défavorables, on évite, autant que possible, de reployer les streamers sur le navire, les opérations de reploiement/déploiement s'avérant en pratique particulièrement fastidieuses et longues. En effet, chaque streamer présente une longueur de plusieurs kilomètres (jusqu'à 12 kilomètres).

Il en résulte que les flûtes sismiques peuvent rester immergées dans l'eau de mer pendant plusieurs mois consécutifs (des périodes d'immersion de 6 à 12 mois étant fréquentes).

Par ailleurs, les flûtes sismiques sont généralement immergées à une faible profondeur (de quelques mètres), et sont généralement traînées à faible vitesse (inférieure ou égale à 5 noeuds).

De ce fait, la structure tubulaire des flûtes est sujette à un encrassement, en particulier dû à la prolifération, sur la couche externe des flûtes sismiques, de microorganismes ou bio-salissures.

Or, ces bio-salissures engendrent à terme plusieurs inconvénients, parmi lesquels :
- elles génèrent des bruits d'écoulement hydrodynamiques : la prolifération des bio-salissures peut aboutir à la formation sur la couche externe des flûtes sismiques d'amalgames ou de concrétions susceptibles de perturber les mesures à effectuer ;
- elles tendent à augmenter la traînée des flûtes sismiques et, par conséquent, la consommation en fuel du bateau qui les remorque ;
- lors de l'enroulage des flûtes sismiques sur les treuils du bateau remorqueur, les bio-salissures se déposent et encrassent le matériel, et génèrent, après quelques jours, une puanteur du fait de leur dégradation à l' air ;
- certaines bio-salissures ont un coquillage susceptible de percer les gaines des flûtes sismiques, ce qui peut donner lieu à des entrées d'eau à l'intérieur de la flûte sismique, ou à une fuite d'huile (dans le cas d'une flûte sismique intégrant un fluide de remplissage, tel que du kérosène).

Plusieurs techniques ont été proposées par l'art antérieur pour pallier les inconvénients engendrés par la prolifération de bio-salissures sur la gaine externe des flûtes sismiques.

On connaît notamment une technique décrite par le document de brevet publié sous le numéro FR-2 847 987, selon laquelle il est proposé un appareil de nettoyage de la gaine externe des flûtes sismiques, qui comprend :
- un outil de traitement de la flûte sismique, comportant des brosses rotatives, ainsi que des lames pour abraser les concrétions formées sur la gaine externe de la flûte ;
- des moyens de positionnement et de guidage de l'appareil le long de la flûte.

Le document EP 0 478 422 divulgue une flûte sismique avec une gaine externe comprenant du matériel biocide.

La structure d'un tel appareil s'avère relativement complexe, dans la mesure où la conception de celui-ci peut être prévue pour permettre son passage au niveau d'éléments en saillie sur la structure tubulaire des flûtes sismiques, ces éléments pouvant être constitués par des flotteurs, ou par des dispositifs de correction de trajectoire (couramment désignés par le terme « bird »).

De tels appareils ont été expérimentés, puis abandonnés dans la pratique, du fait de leur coût et surtout du fait qu'ils se sont pour la plupart décrochés des flûtes sismiques pour se perdre dans les fonds marins.

On connaît également les peintures « anti-fooling », classiquement utilisées sur les coques de bateau.

Toutefois, les peintures « anti-fooling » contiennent généralement du TBT (tributylétain) bien connu désormais pour sa toxicité. De telles peintures sont donc inacceptables tant d'un point de vue des considérations environnementales (pollution de l'eau de mer) que du point de vue de la sécurité des personnes susceptibles d'être en contact avec la peinture au TBT lors de la manipulation des flûtes sismiques.

En outre, les techniques d'application de peinture « anti-fooling » s'avèrent peu compatibles avec les contraintes techniques-économiques liées aux flûtes sismiques.

En effet, les techniques d'application de ces peintures impliquent une opération de projection de la peinture sur le support.

Cette opération de projection peut être effectuée par des opérateurs, à l'aide de pistolet de projection. Dans ce cas, l'opération de projection s'avère particulièrement longue et coûteuse compte tenu du nombre important de kilomètres de flûtes à traiter.

De plus, il est nécessaire de respecter un temps de séchage de la peinture, ce qui implique de stocker les flûtes sismiques dans des positions particulièrement encombrantes pour éviter tout contact des parties de flûtes traitées entre elles (ce qui exclu l'enroulement des flûtes sismiques) ; un tel stockage s'avère par conséquent non viable économiquement.

Il a également été proposé d'effectuer la projection de peinture « anti-fooling » à l'aide d'anneaux de projection, à l'intérieur desquels la structure tubulaire des flûtes sismiques circule, ceci avec une peinture ayant la capacité de sécher au contact de l'eau. Le principe de mise en oeuvre de cette technique consiste à monter les anneaux de projection sur le navire remorqueur des streamers et à effectuer l'opération de traitement à l'aide des anneaux en pleine mer, les flûtes sismiques étant stockées dans l'eau au fur et à mesure de leur traitement.

Une telle technique permet donc de s'affranchir des problèmes de stockage des flûtes sismiques pendant la phase de séchage de la peinture, mais implique des coûts de mise en oeuvre très importants. En effet, les coûts d'équipement des bateaux sont substantiels dans la mesure où il est nécessaire de prévoir autant d'anneaux de projection qu'il y a de treuils d'enroulement des flûtes sismiques (jusqu'à douze treuils peuvent être montés sur un bateau de prospection sismique).

En outre, une logistique et des moyens de stockage de la peinture viennent s'ajouter aux autres équipements présents sur le bateau, déjà en nombre considérable.

L'invention a notamment pour objectif de pallier ces inconvénients de l'art antérieur.

L'invention propose une solution selon la revendication 1.

Plus précisément, l'invention a pour objectif de proposer une technique permettant à une flûte sismique de résister à l'encrassement par des bio-salissures, qui puisse être mise en oeuvre à l'aide de procédés industriels notablement moins coûteux comparés aux techniques mentionnées en référence à l'art antérieur.

L'invention a également pour objectif de fournir une telle technique qui soit compatible avec les contraintes mécaniques liées aux flûtes sismiques, en particulier en ce qui concerne leur capacité à être enroulées.

L'invention a aussi pour objectif de fournir une telle technique qui soit compatible avec les composants internes des flûtes sismiques, s'agissant en particulier des composants transportant un courant électrique.

L'invention a aussi pour objectif de fournir une telle technique qui évite une augmentation de poids importante des flûtes sismiques.

Ces objectifs, ainsi que d'autres qui apparaîtront par la suite, sont atteints grâce à l'invention qui a pour objet une flûte sismique du type comprenant des sections comprenant une gaine principale revêtue d'une gaine externe, caractérisée en ce que ladite gaine externe est formée à partir d'un matériau thermoplastique chargé par un matériau biocide.

Ainsi, grâce à l'invention, les sections constituant les éléments tubulaires des flûtes sismiques sont traités contre la prolifération des bio-salissures sur la couche externe de ces sections, le matériau biocide noyé dans le matériau thermoplastique de la gaine externe se diffusant progressivement et de manière continue à la surface de la gaine externe.

En d'autres termes, le matériau thermoplastique de la gaine externe est perméable au matériau biocide dont il est chargé.

On comprend que l'invention autorise certes les microorganismes marins à s'accrocher sur la gaine externe des flûtes sismiques, mais aussi que le traitement selon l'invention permet de les éliminer au fur et à mesure grâce à l'effet biocide du matériau correspondant dont est chargée la gaine externe de la flûte.

Par ailleurs, l'invention propose de revêtir la gaine principale d'une véritable gaine, et non d'une simple couche de peinture « anti-fooling » comme mentionné en référence à l'art antérieur. Il en résulte que cette gaine, réalisée en un matériau thermoplastique, permet le recours à des techniques de fabrication éprouvées et économiquement viables, telle que la co-extrusion ou la bi-extrusion.

Ainsi, l'invention permet l'utilisation de techniques courantes du domaine de la plasturgie, évitant les problèmes rencontrés avec l'application de peinture « anti-fooling », s'agissant notamment de :
- traiter les longueurs très importantes de sections de flûtes sismiques, ceci à l'aide de process industriels limitant la main-d'oeuvre humaine ;
- éviter l'immobilisation des sections de flûtes sismiques, et donc leur stockage, du fait du respect du temps de séchage ;
- éviter la mise en oeuvre d'équipements supplémentaires sur les bateaux remorqueurs de flûtes sismiques ;
- supprimer le recours à des substances toxiques.

La conception de la gaine externe, en un matériau thermoplastique, autorise, comme déjà mentionné, la mise en oeuvre de techniques d'extrusion regroupant les avantages :
- mélanger aisément des granules de matériaux thermoplastiques avec un matériau biocide, en amont de l'opération de chauffage-extrusion ;
- être particulièrement adaptée à la réalisation de produits linéaires de longueur éventuellement très importante ;
- limiter les contraintes de stockage après extrusion ;
- permettre le gainage des sections de flûtes sismiques sur des sites dédiés indépendants des bateaux remorqueurs ;
- permettre le traitement des sections de flûtes sismiques selon l'invention à des coûts notablement réduits par rapport aux techniques de l'art antérieur.

De plus, la gaine externe exerçant l'effet biocide est obtenue sans utiliser de solvants contrairement aux peintures « anti-fooling », ce qui est bien entendu un avantage sur le plan environnemental.

Selon un mode de réalisation préférentiel, ledit matériau biocide comprend du métal cuivreux.

Il a en effet été montré que les cuivres présentent une toxicité pour les phytoplanctons et d'autres microorganismes marins, ceci sans toutefois entraîner de toxicité pour l'homme et sans engendrer, ou quasiment, de pollution marine.

On note que le cuivre exerce un effet biocide une fois en contact avec l'eau, du fait de son oxydation.

Selon une solution avantageuse, ladite gaine externe comprend entre 75 et 85 % de métal cuivreux.

De cette façon, on optimise l'effet biocide de la gaine externe, tout en évitant de rendre la gaine externe conductrice de l'électricité. Le fait d'éviter de rendre la gaine externe conductrice évite tout problème de couplage galvanique entre la gaine externe et la gaine principale. Un tel couplage galvanique aurait tendance à inhiber le pouvoir d'oxydation du matériau biocide et, par conséquent, la capacité de la flûte à s'opposer à la prolifération de microorganismes.

Selon un autre mode de réalisation, ledit matériau biocide comprend de la poudre d'argent.

Un tel mode de réalisation s'avère également efficace, mais engendre des coûts plus importants que le recours au métal cuivreux.

On note que l'argent exerce un effet biocide une fois en contact avec l'eau, du fait d'une réaction électrolytique.

Avantageusement, ladite gaine externe présente une épaisseur inférieure à 1 mm.

De cette façon, ladite gaine externe présente une épaisseur limitée mais suffisante pour contenir une quantité de matériau biocide exerçant l'effet attendu, ceci tout en évitant de conférer une rigidité supplémentaire à la flûte sismique, ce qui serait préjudiciable à sa capacité à être enroulée sur un treuil.

En outre, une gaine externe selon l'invention présentant de telles épaisseurs permet d'éviter d'augmenter de façon importante le poids de la flûte sismique.

Selon une première variante de réalisation, ladite gaine principale et ladite gaine externe comprennent le même matériau thermoplastique, les sections de flûtes sismiques pouvant dans ce cas être obtenus par un procédé de fabrication selon lequel la gaine externe et la gaine principale sont réalisées lors d'une étape de co-extrusion.

Selon une deuxième variante de réalisation, ladite gaine principale et ladite gaine externe comprennent des matériaux thermoplastiques différents, un liant étant intercalé entre ladite gaine principale et ladite gaine externe, les sections de flûtes sismiques pouvant dans ce cas être obtenus par un procédé de fabrication comprenant :
- une étape d'extrusion de ladite gaine principale ;
- une étape de dépôt d'un liant sur ladite gaine principale ;
- une étape d'extrusion de ladite gaine externe sur ladite gaine principale revêtue dudit liant.

D'autres caractéristiques et avantages de l'invention apparaîtront plus clairement à la lecture de la description suivante de deux modes de réalisation préférentiels de l'invention, et de plusieurs de ses variantes, donnés à titre d'exemples illustratifs et non limitatifs, et des dessins annexés parmi lesquels :
- la figure 1 est une vue en coupe des différentes couches et composants d'une section de flûte sismique selon un premier mode de réalisation de l'invention ;
- les figures 2 et 3 sont des vues respectivement en coupe et en perspective des gaines principales et externes d'une section de flûte sismique selon l'invention.

Tel qu'indiqué précédemment, le principe de l'invention réside dans le fait de proposer une flûte sismique dans laquelle des sections présentent une protection contre les bio-salissures, cette protection prenant la forme d'une gaine externe rapportée sur la gaine principale des sections, cette gaine externe étant formée à partir d'un matériau thermoplastique chargé par un matériau biocide.

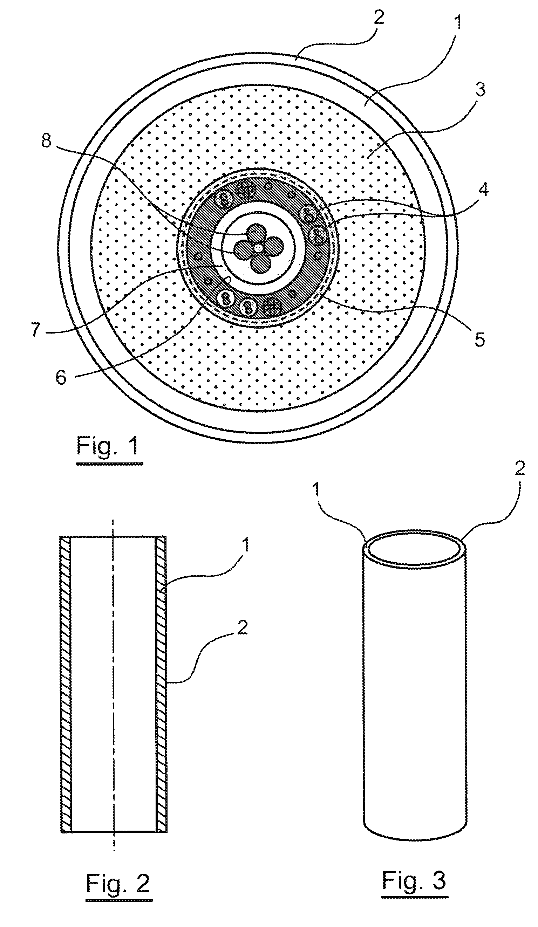

En référence aux figures 2 et 3, une section (ou élément tubulaire) d'une flûte sismique comprend une gaine principale 1 délimitant un corps dans lequel sont montés des hydrophones, des câbles d'alimentation et des câbles de transmission de l'information.

Une gaine externe 2 est rapportée sur la gaine principale 1 de façon à revêtir celle-ci.

On note qu'une section de flûte sismique présente généralement une longueur de 150 mètres, la flûte sismique pouvant présenter une longueur totale d'environ 12 kilomètres.

Dans le cadre de l'invention, la flûte sismique peut être indifféremment du type « fluide » ou « solide » ou toute autre technologie de remplissage de flûte sismique tel que le gel.

On rappelle qu'une flûte sismique du type « fluide » intègre dans la gaine principale du kérosène dont la fonction est double : une fonction de correction de densité de telle sorte que la densité de la flûte soit neutre dans l'eau de mer (c'est-à-dire que la flûte ne coule pas ni ne flotte ou, en d'autres termes, la flûte et l'eau de mer présentent la même densité), et une fonction acoustique (le kérosène jouant un rôle de transmission d'ondes).

Une flûte sismique de type « solide » se différencie notamment d'une flûte sismique de type « fluide » en ce qu'elle intègre dans la gaine principale une mousse imperméable (mousse à cellules fermées) à la place du kérosène.

La figure 1 illustre, vue en coupe, une section de flûte sismique de type « solide ».

Selon le présent mode de réalisation, une telle section comprend :
- une gaine externe 2 ;
- une gaine principale 1 ;
- un volume annulaire de mousse à cellules fermées 3 (permettant le contrôle de flottabilité de la flûte) ;
- une pluralité de câbles de télémétrie 4 ;
- une couche 5, assurant le maintien des câbles de télémétrie 4;
- un élément tubulaire en kevlar © 7, assurant la résistance mécanique de la flûte en reprenant les efforts de traction ;
- des câbles d'alimentation électrique 8.

Selon le principe de l'invention, la gaine externe 2 est formée à partir d'un matériau thermoplastique chargé par un matériau biocide.

Selon le présent mode de réalisation, le matériau biocide est constitué par de la poudre de métal cuivreux mélangé à des granules du matériau thermoplastique, la poudre de métal cuivreux étant destinée à être noyée dans le matériau thermoplastique après fusion de ce dernier lors d'une étape de chauffage-extrusion.

De plus, la gaine externe comprend environ entre 75% et 85% de métal cuivreux, ce qui correspond à un pourcentage optimisé pour produire l'effet biocide attendu tout en évitant de rendre la gaine externe conductrice d'électricité.

On note qu'un autre matériau biocide pourrait être incorporé à la gaine externe selon d'autres modes de réalisation envisageables, telle que de la poudre d'argent.

Préférentiellement, la gaine externe 2 présente une épaisseur inférieure à 1 mm, la gaine principale présentant quant à elle une épaisseur comprise entre 3 mm et 5 mm.

On note que cette épaisseur de la gaine principale est choisie pour assurer une protection mécanique suffisante des différents câbles et composants de la flûte sismique. Aussi, l'invention permet de limiter l'augmentation de rigidité et du poids de la flûte sismique en rapportant sur la gaine principale une gaine externe de faible épaisseur, plutôt que d'incorporer le matériau biocide constitué par un métal cuivreux ou par une poudre d'argent directement dans la gaine principale, ce qui conduirait, compte tenu de l'épaisseur relativement importante de la gaine principale, à une augmentation très importante de la rigidité et du poids de la flûte sismique.

Selon le mode de réalisation illustré par la figure 1, la gaine principale 1 et la gaine externe 2 comprennent le même matériau thermoplastique, en l'occurrence un polypropylène, ou un polyuréthane ou encore un polyamide.

Selon ce mode de réalisation, la gaine principale et la gaine externe sont réalisées par co-extrusion.

Selon le mode de réalisation illustré par la figure 2, la gaine principale et la gaine externe comprennent des matériaux thermoplastiques différents, dans le groupe des matériaux suivants : polypropylène, polyuréthane ou polyamide.

En outre, un liant est intercalé entre la gaine principale et la gaine externe.

Dans ce cas, le procédé de fabrication de la section de flûtes sismiques correspondant comprend les étapes de :
- extrusion de la gaine principale ;
- dépôt du liant sur la gaine principale ;
- extrusion de la gaine externe sur la gaine principale revêtue du liant.

On comprend que dans l'un ou l'autre des modes de réalisation qui viennent d'être décrits, la gaine externe est adhérisée sur la gaine principale (par l'intermédiaire, ou non, d'un liant), ce qui évite tout déplacement ultérieur relatif de la gaine externe et de la gaine principale.

On note qu'après quelques temps d'utilisation d'une flûte sismique selon l'invention, une opération de maintenance peut être nécessaire pour réactiver l'effet biocide du matériau correspondant incorporé à la gaine externe. Pour cela, une simple attaque mécanique de la gaine externe suffit, cette attaque mécanique pouvant être réalisée à l'aide d'un nettoyeur à haute pression ou par une technique de brossage.

## Revendications

1. Flûte sismique du type comprenant des sections comprenant une gaine principale revêtue d'une gaine externe,
**caractérisée en ce que** ladite gaine externe est formée à partir d'un matériau thermoplastique chargé par un matériau biocide, ladite gaine externe présentant une épaisseur inférieure à 1 mm.

2. Flûte sismique selon la revendication 1, **caractérisée en ce que** ledit matériau biocide comprend du métal cuivreux.

3. Flûte sismique selon la revendication 2, **caractérisée en ce que** ladite gaine externe comprend entre 75 % et 85 % de métal cuivreux.

4. Flûte sismique selon la revendication 1, **caractérisée en ce que** ledit matériau biocide comprend de la poudre d'argent.

5. Flûte sismique selon l'une quelconque des revendications 1 à 4, **caractérisée en ce que** ladite gaine principale présente une épaisseur comprise entre 3 mm et 5 mm.

6. Flûte sismique selon l'une quelconque des revendications 1 à 5, **caractérisée en ce que** ladite gaine principale et ladite gaine externe comprennent le même matériau thermoplastique.

7. Flûte sismique selon l'une quelconque des revendications 1 à 5, **caractérisée en ce que** ladite gaine principale et ladite gaine externe comprennent des matériaux thermoplastiques différents, un liant étant intercalé entre ladite gaine principale et ladite gaine externe.

## Claims

1. Seismic streamer of the type comprising sections including a main sheath covered with an external sheath,
**characterised in that** said external sheath is formed using a thermoplastic material loaded with a biocide material, said external sheath having a thickness of less than 1 mm.

2. Seismic streamer set forth in claim 1, **characterised in that** said biocide material includes copper metal.

3. Seismic streamer set forth in claim 2, **characterised in that** said external sheath includes between 75% and 85% copper metal.

4. Seismic streamer set forth in claim 1, **characterised in that** said biocide material includes powdered silver.

5. Seismic streamer as set forth in any of claims 1 to 4, **characterised in that** said main sheath has a thickness between 3 mm and 5 mm.

6. Seismic streamer as set forth in any of claims 1 to 5, **characterised in that** said main sheath and said external sheath include the same thermoplastic material.

7. Seismic streamer as set forth in any of claims 1 to 5, **characterised in that** said main sheath and said external sheath include different thermoplastic materials, a binder being disposed between said main sheath and said external sheath.

## Patentansprüche

1. Seismisches Kabel der Art, das Abschnitte umfasst, die einen Hauptmantel umfassen, der mit einem Außenmantel beschichtet ist,
**dadurch gekennzeichnet, dass** der Außenmantel aus einem thermoplastischen Material geformt ist, das mit einem bioziden Material gefüllt ist, wobei der Außenmantel eine Dicke von weniger als 1 mm aufweist.

2. Seismisches Kabel nach Anspruch 1, **dadurch gekennzeichnet, dass** das biozide Material Kupfermetall umfasst.

3. Seismisches Kabel nach Anspruch 2, **dadurch gekennzeichnet, dass** der Außenmantel zwischen 75 % und 85 % Kupfermetall umfasst.

4. Seismisches Kabel nach Anspruch 1, **dadurch gekennzeichnet, dass** das biozide Material Silberpulver umfasst.

5. Seismisches Kabel nach einem der Ansprüche 1 bis 4, **dadurch gekennzeichnet, dass** der Hauptmantel eine Dicke aufweist, die zwischen 3 mm und 5 mm liegt.

6. Seismisches Kabel nach einem der Ansprüche 1 bis 5, **dadurch gekennzeichnet, dass** der Hauptmantel und der Außenmantel das gleiche thermoplastische Material umfassen.

7. Seismisches Kabel nach einem der Ansprüche 1 bis 5, **dadurch gekennzeichnet, dass** der Hauptmantel und der Außenmantel unterschiedliche thermoplastische Materialien umfassen, wobei ein Bindemittel zwischen dem Hauptmantel und dem Außenmantel eingeschoben ist.
